# EUROPÄISCHE PATENTSCHRIFT

(11) **EP 1 630 628 B1**
(45) Veröffentlichungstag und Bekanntmachung des Hinweises auf die Patenterteilung: **09.09.2009**
(21) Anmeldenummer: 05016041.5
(22) Anmeldetag: 23.07.2005
(51) Int. Cl.: G05B 5/01, G05B 13/02, G05D 3/14, F16D 43/00, F16D 48/00

(54) **Verfahren zur Verringerung von Stellpositionsschwingungen eines von einem Lageregler angesteuerten Stellglieds eines Kupplungsaktors**
Method for reducing position oscillations of an actuator controlled by a position controller of an automatic clutch
Procédé de réduction des oscillations de la position d'un actionneur commandé par un régulateur de position d'un embrayage automatique

(30) Priorität: 24.08.2004 DE 102004040827
(43) Veröffentlichungstag der Anmeldung: 01.03.2006
(73) Patentinhaber: LuK Lamellen und Kupplungsbau Beteiligungs KG, 77815 Bühl (DE)
(72) Erfinder: Jung, Mario, 76547 Sinzheim (DE); Gerhart, Jürgen, 77767 Appenweier (DE)

(56) Entgegenhaltungen:
- EP-A- 0 709 246
- DE-A1- 2 638 231
- DE-A1- 4 134 669
- DE-A1- 10 159 267
- US-A- 5 669 849
- US-A- 6 045 484
- US-A1- 2004 210 374

## Beschreibung

Die vorliegende Erfindung betrifft ein Verfahren bzw. eine Vorrichtung zur Verringerung von Stellpositionsschwingungen eines von einem Lageregler angesteuerten Stellglieds eines Kupplungsaktors.

Automatisiert betätigte Kupplungen finden sich in zunehmendem Maße im Triebstrang von Kraftfahrzeugen mit unterschiedlichen Getriebekonzepten. Diese können von einem automatisiert betätigten Schaltgetriebe bis zu Doppelkupplurigsgetrieben und Getriebekonzepten mit stufenlos veränderbarer Übersetzung reichen.

Bei einer solchen automatisiert betätigten Kupplung ist ein beispielsweise elektromotorisch arbeitender Kupplungsaktor vorhanden, der von einer elektronischen Steuereinrichtung zum Öffnen und Schließen der Kupplung angesteuert wird. Eine solche Kupplung weist konzeptionell bedingt eine Ausrückkraft auf, mit der sie einer Betätigung durch den elektromotorischen Kupplungsaktor entgegenwirkt. Um nun den Kupplungsaktor zur Erzeugung eines Kräftegleichgewichts nicht ständig bestromen zu müssen, kann eine Kompensationsfeder vorgesehen sein, die eine Gegenkraft erzeugt.

Eine solche Vorrichtung, bzw. ein solches Verfahren, ist aus DE 101 59 267 A1 bekannt.

Über die Position des Stellglieds des Kupplungsaktors und dessen Verfahrweg wird das von der Kupplung übertragene Moment beeinflusst. Veränderungen der Stellposition des Stellglieds führen damit zu einer Veränderung des Kupplungsmoments die, wenn die Kupplung mit Überanpressung betrieben wird, vom Fahrer des Fahrzeugs nicht als komfortmindernd festgestellt werden können.

Wird die Kupplung aber im Schlupf betrieben, so können Veränderungen des Kupplungsmoments vom Fahrer in Form von Veränderungen der Beschleunigung des Fahrzeugs festgestellt werden.

Da nunmehr die Stellposition des Stellglieds des Kupplungsaktors von entsprechender Bedeutung ist, ist diese Stellposition im Rahmen eines Regelvorgangs zu überprüfen und nachzuführen. Durch die Ausrückkraft der Kupplung und der von der Kompensationsfeder aufgebrachten Gegenkraft kann es zu einem Kräftegleichgewicht kommen, dem sogenannten Kraftnullpunkt. Wenn nun dieser Kraftnullpunkt in Momentenbereichen liegt, in denen beispielsweise aufgrund einer Überanpressung kein Schlupf in der Kupplung mehr vorliegt, so treten Stellpositionsschwingungen um den Kraftnullpunkt herum nicht als komfortmindernd in Erscheinung. Wenn die Ausrückkraftkennlinie der Kupplung einen hohen Gradienten besitzt, ist der Bereich, um den Stellpositionsschwingungen herum auftreten, entsprechend klein. Aufgrund von Serienstreuungen der Kupplung ist es nun möglich, dass die Ausrückkraftkennlinie der Kupplung flach verläuft, so dass der Kraftnullpunktsbereich deutlich breiter wird. Wenn nun dieser deutlich verbreiterte Bereich in einem Schlupfbereich der Kupplung liegt, so können Stellpositionsschwingungen vom Fahrer direkt in Form von Änderungen in der Beschleunigung des Fahrzeugs wahrgenommen werden.

Aufgabe der vorliegenden Erfindung ist es daher nunmehr, solche Stellpositionsschwingungen eines von einem Lageregler angesteuerten Stellglied eines Kupplungsaktors zu erkennen und entsprechende Gegenmaßnahmen zur Verringerung der Stellpositionsschwingungen einzuleiten.

Auch soll eine Vorrichtung zur Durchführung des zu schaffenden Verfahrens geschaffen werden.

Die Erfindung schafft nunmehr zur Lösung dieser Aufgabe hinsichtlich des Verfahrens ein Verfahren zur Verringerung von Stellpositionsschwingungen eines von einem Lageregler angesteuerten Stellglieds eines Kupplungsaktors mit den Merkmalen des Anspruchs 1. Nach diesem Verfahren wird in einem ersten Schritt eine erste Zahl der während einer vorbestimmten ersten Zeitdauer in Folge auftretenden, einen Stellpositionsschwellwert überschreitenden Istpositionswerte der Stellposition erfasst und dann in einem zweiten Schritt, wenn die im ersten Schritt erfasste erste Zahl einen vorbestimmten ersten Grenzwert überschreitet, der Stellpositionsschwellenwert verringert und sodann in einem dritten Schritt, eine zweite Zahl der während einer vorbestimmten zweiten Zeitdauer auftretenden Überschreitungen nach dem zweiten Schritt bestimmt und beim Überschreiten eines zweiten Grenzwertes aus mindestens zwei Lagereglerparametersätzen derjenige ausgewählt und zur Lageregelung verwendet, der ein Überschreiten der Grenzwerte und/oder des Stellpositionsschwellenwerts vermeidet.

Damit wird nach dem erfindungsgemäßen Verfahren zunächst während der ersten vorbestimmten Zeitdauer überprüft, wie oft die Istpositionswerte der Stellposition in Folge hintereinander einen Stellpositionsschwellenwert überschreiten, um ein Kriterium zu schaffen, ob es sich um eine Lagereglerschwingung handelt, gegen die Gegenmaßnahmen zur Verringerung der Lagereglerschwingung oder Stellpositionsschwingung ergriffen werden müssen.

Eine Lagereglerschwingung unterscheidet sich dabei von einer Nachregelschwingung derart, dass die Schwingungen der Istposition beim Nachregeln nur einseitig vom Sollwert, d.h. der Sollposition vorkommen, während bei Lagereglerschwingungen die Schwingung der Istposition beidseitig um den Sollwert vorliegt.

Wenn nun während der ersten vorbestimmten Zeitdauer eine erste Zahl von solchen Stellpositionsschwellenwerten überschreitenden Istpositionswerte der Stellposition erfasst werden, die in Folge aufeinander auftreten, und diese Zahl einen vorbestimmten ersten Grenzwert überschreitet, so wird der Stellpositionsschwellenwert verringert, also die Einschaltschwellen bzw. Ausschaltschwellen des Lagereglers abgesenkt. Damit können mit dem Absenken der Einschalt- bzw. Ausschaltschwellen oder auch der Einschalthysterese oder Ausschalthysterese des Lagereglers kurzfristig Gegenmaßnahmen zum Verringern der Lagereglerschwingung ergriffen werden.

Da eine solche Verringerung der Hystereschwellen zu einer stärkeren Belastung des Stellglieds bzw. des Kupplungsaktors führt, ist es nach einem weiteren Schritt der Erfindung vorgesehen, dass derartige Verringerungen der Hystereseschwellen nicht fortlaufend durchgeführt werden, sondern festgestellt wird, wie oft - nach der zweiten Zahl - während einer vorbestimmten zweiten Zeitdauer derartige Überschreitungen vorgekommen sind und dann, wenn diese zweite Zahl einen zweiten Grenzwert überschreitet, aus mindestens zwei Lagereglerparametersätzen derjenige ausgewählt und zur Lageregelung verwendet, der ein Überschreiten der ersten und zweiten Grenzwerte und/oder des Stellpositionsschwellenwerts vermeidet.

Damit schafft die Erfindung ein Verfahren, wonach auftretende Lageregierschwingungen kurzfristig durch eine Verringerung der Stellpositionsschwellenwerte verringert werden können und als längerfristige Maßnahme - wenn also mittels des Verfahrens erkannt wurde, dass es sich bei der verbauten Kupplung um eine Kupplung mit nur geringer Ausrückkraft handelt - der Lageregler auf einen dieser Gegebenheit Rechnung tragenden zweiten Lagereglerparametersatz umschaltet, der ein Überschreiten des ersten Grenzwerts oder ein Überschreiten des zweiten Grenzwerts und/oder ein Überschreiten der Stellpositionsschwellenwerte vermeidet.

Es ist nach der Erfindung dabei vorgesehen, dass der Stellpositionsschwellenwert einer von einem oberen und unteren Schwellenwert überlagerten Sollposition entspricht. Wenn nun die festgestellte Istposition des Stellglieds des Kupplungsaktors einer von einem oberen und unteren Schwellenwert überlagerten Sollposition entspricht, wobei der obere und untere Schwellenwert der Einschalthysterese und Ausschalthysterese des Lagereglers entsprechen kann, so wird nach der Erfindung davon ausgegangen, dass der Stellpositionsschwellenwert erreicht wurde und die erste Zahl um den Faktor 1 inkrementiert.

Ein Überschwinger der Istposition kann nun dadurch erkannt werden, dass die Istposition über die um die Einschaltschwelle überlagerte Sollposition hinaus läuft und demgemäss kann ein Unterschwinger dadurch erkannt werden, dass die Istposition unter die um den unteren Schwellenwert überlagerte Sollposition hinaus läuft.

Wenn nun eine direkte Aufeinanderfolge eines solchen Überschwingers, Unterschwingers und Überschwingers während einer vorbestimmten ersten Zeitdauer auftritt, also drei derartige Stellpositionsschwellenwerte überschreitende Schwingungsvorgänge sukzessiv stattgefunden haben, kann nach einer Ausführungsform des erfindungsgemäßen Verfahrens auf eine Lagereglerschwingung geschlossen werden, auf die beispielsweise durch eine Verringerung der Stellpositionsschwellenwerte reagiert wird, so dass die Zahl der vom Lageregler durchgeführten Regelvorgänge aufgrund der Stellpositionsschwellenwertsverringerung zunimmt.

Nach einer Weiterbildung des erfindungsgemäßen Verfahrens ist es vorgesehen, dass die erste Zahl um ein Inkrement erhöht wird, wenn der Gradient der Istpositionswerte einen vorbestimmten Schwellenwert überschreitet. Damit kann in die Erkennung der Lagereglerschwingungen zusätzlich die Geschwindigkeit der Veränderung der Istposition eingehen, wodurch es beispielsweise auch möglich ist, in Abhängigkeit vom Gradienten der Istposition eine Gewichtung der Wahrscheinlichkeit vorzunehmen, mit der die Istposition des Stellglieds aus den um den unteren und oberen Schwellenwert überlagerten Sollpositionen des Stellglieds heraus laufen wird.

Auch kann der Gradient der Istposition dazu verwendet werden, einen Überschwinger oder Unterschwinger zu erkennen, wenn nämlich der Gradient der Istpositionswerte einen vorbestimmten Schwellenwert überschreitet.

Wie es vorstehend bereits erläutert wurde, wird eine erste Zahl der Überschreitungen der Stellpositionsschwellenwerte während einer vorbestimmten ersten Zeitdauer erfasst. Innerhalb dieser vorbestimmten ersten Zeitdauer müssen demgemäss eine bestimmte Zahl von Uberschwinger/Unterschwinger in Folge aufeinander aufgetreten sein, um nach der Erfindung eine Lagereglerschwingung zu erkennen. Wenn diese Bedingung von beispielsweise drei hintereinander stattfindenden Überschwingern bzw. Unterschwingern erfüllt ist, so kann nach der Erfindung ein Flag gesetzt werden, wobei diese erste Zeitdauer nach der Erfindung als Funktion der Frequenz der Grenzzyklusschwingung des Stellglieds oder auch als feste Zeitdauer oder betriebspunktabhängig bestimmt werden kann.

Die Wahrscheinlichkeit, dass es zu Lagereglerschwingungen kommt, ist bei kleinen Änderungen der Sollposition des Stellglieds größer. Um nun dieser Gegebenheit Rechnung zu tragen, ist es nach der Erfindung vorgesehen, dass die erste Zahl um ein Inkrement erhöht wird, wenn der Betrag des Gradienten der Sollposition einen vorbestimmten Schwellenwert unterschreitet.

Damit wird nach dem erfindungsgemäßen Verfahren eine Zusatzbedingung eingeführt, dass Maßnahmen zur Verringerung der Stellpositionsschwingung nur dann eingeleitet werden, wenn der Betrag des Gradienten der Sollposition kleiner ist, als ein vorbestimmter Schwellenwert, also sich die Sollposition nur wenig ändert. Treten nun Änderungen der Sollposition auf, die größer sind als der Schwellenwert, so wird nach der Erfindung die erste Zahl nicht inkrementiert.

Es hat sich gezeigt, dass auch ein Schwingen des Sollwerts - der Sollposition - stattfinden kann, was beispielsweise durch Schwingungen im Verlauf des Motormoments erfolgen kann, und diese Schwingungen des Sollwerts auch dazu führen können, dass die vorstehend genannten Bedingungen erfüllt sind.

Um nun dieser Gegebenheit Rechnung zu tragen, ist es nach der Erfindung vorgesehen, dass die erste Zahl um ein Inkrement erhöht wird, wenn der Betrag der Differenz aus Istpositionswert und einem über die erste Zeitdauer gemittelten Sollpositionswert einen vorbestimmten Schwellenwert überschreitet. Damit wird nach der Erfindung der Verlauf der Sollposition innerhalb der ersten vorbestimmten Zeitdauer durch Mittelwertsbildung gefiltert, so dass neben der Beobachtung, ob eine entsprechende Zahl von Über- oder Unterschwinger erkannt wurden, zusätzlich gefordert wird, dass die Istposition um einen Wert von der gemittelten Sollposition entfernt liegt, der größer ist als der vorbestimmte Schwellenwert.

Der hier genannte Schwellenwert wird dabei in erster Linie von der Einschaltschwelle bestimmt. Der Schwellenwert ist dabei kleiner als die Einschaltschwelle und kann einen Wert von 0 % bis 100 % der Einschaltschwelle annehmen, wobei ein Beispiel eines solchen Schwellenwerts bei 80 % der Einschaltschwelle liegt, so dass dann, wenn die Istposition nicht außerhalb von 80 % der Einschaltschwelle um die gemittelte Sollposition herum liegt, nicht ein Schwingen des Istwertes um den Sollwert vorliegt und somit keine Lagereglerschwingung erkannt wird.

Wenn nun nach den vorstehend gegebenen Bedingungen eine Lagereglerschwingung erkannt wurde, so sind nach der Erfindung verschiedene Gegenmaßnahmen vorgesehen. Dabei kann ganz allgemein zwischen solchen Gegenmaßnahmen unterschieden werden, die über alle Fahrsituationen und den kompletten Arbeitsbereich des Reglers wirken und solchen Maßnahmen, die nur in bestimmten, beispielsweise kritischen Fahrsituationen oder kritischen Arbeitsbereichen des Reglers liegen. Eine weitere Unterscheidung ist möglich zwischen kurzfristigen und langfristigen Gegenmaßnahmen.

Als kurzfristige und sofort wirkende Gegenmaßnahme werden die Stellpositionsschwellenwerte verringert, also die Einschaltschwelle und Ausschaltschwelle verkleinert. Das Verkleinern der Ausschaltschwelle oder Ausschalthysterese bewirkt, dass die Schwingungen von der Amplitude her kleiner werden, da sie sofort ausgeregelt werden. Damit steigt die Regelfrequenz etwas an, was dazu führen kann, dass sogenannte Ruckschwingungen weniger angeregt werden. Wie es vorstehend bereits erläutert wurde, handelt es sich hierbei um eine Gegenmaßnahme, die den Kupplungsaktor höher belastet und somit das Verkleinern der Ausschaltschwelle oder Ausschalthysterese auf Fahrsituationen beschränkt werden kann, in denen Schlupf vorliegt. In solchen Schlupfphasen wird nämlich das im Triebstrang herrschende Moment - wobei Schwingungen des Triebstrangmoments vom Fahrer in der Form von Veränderungen der Beschleunigung des Fahrzeugs festgestellt werden können - von der Kupplung bestimmt. In solchen Schlupfphasen werden daher Lagereglerschwingungen vom Fahrer als Ruckschwingungen festgestellt. Wenn nun als kurzfristige Gegenmaßnahme in einer solchen Schlupfphase die Stellpositionsschwellenwerte verringert werden und damit die Reglerfrequenz ansteigt, so wird mittels dieser kurzfristigen Maßnahme dem Auftreten von Reglerschwingungen - die vom Fahrer dann noch als Veränderungen der Beschleunigung festgestellt werden können, verringert, wodurch die spürbaren Rupfschwingungen gemildert oder abgewendet werden und damit der Fahrkomfort verbessert wird.

Zusätzlich zu der Verringerung der Stellpositionsschwellenwerte kann auch die Lastkompensation des Lagereglers verringert oder abgeschaltet werden. Die Verringerung oder das Abschalten der Lastkompensation verringert aufgrund des Abschaltens oder Verringerns des Regleranteils beim Lastausgleich auch die Gefahr von Schwingungen bei kleinen Lasten.

Neben den genannten kurzfristigen Gegenmaßnahmen sind nach der Erfindung aber auch langfristige Gegenmaßnahmen vorgesehen, die dann ergriffen werden, wenn nach dem erfindungsgemäßen Verfahren während einer vorbestimmten zweiten Zeitdauer mehrfach festgestellt wurde, dass Lagereglerschwingungen aufgetreten sind.

Wenn solche Lagereglerschwingungen während der vorbestimmten zweiten Zeitdauer mehrfach vorgekommen sind, dann wird nach der Erfindung ein den Lagereglerschwingungen Rechnung tragender anderer Lagereglerparametersatz verwendet, der auf die geringere Ausrückkraft der Kupplung abgestimmt ist. Nach der Erfindung kann es sich bei dem Lageregler um einen PID-Regler handeln, bei dem als erste und kurzfristige Gegenmaßnahme nach dem Überschreiten des ersten Grenzwerts - während der ersten vorbestimmten Zeitdauer sind mehrfach hintereinander Lagereglerschwingungen aufgetreten - der Proportionalanteil, der Integralanteil und der Differentialanteil verringert wird.

Neben dieser Möglichkeit der Verringerung der PID-Beiwerte ist es nach der Erfindung aber auch vorgesehen, einen anderen aus zumindest zwei vorgesehenen Lagereglerparametersätzen auszuwählen, der auf die geringen Ausrückkräfte der Kupplung abgestimmt ist. Auf diesen zweiten Lagereglerparametersatz wird nach der Erfindung also dann umgeschaltet, wenn während der ersten vorbestimmten Zeitdauer mehrfach hintereinander Lagereglerschwingungen aufgetreten sind und ein solches mehrfaches hintereinander Auftreten von Lagereglerschwingungen während einer vorbestimmten zweiten Zeitdauer mehrfach passiert. Der dann zum Einsatz kommende zweite Lagereglerparametersatz trägt den Gegebenheiten der verbauten Kupplung - diese weist eine geringe Ausrückkraft auf ― Rechnung und sieht solche Lagereglerparameter vor, die ein Überschreiten des ersten Grenzwerts und des zweiten Grenzwerts und/oder der Stellpositionsschwellenwerte vermeidet.

Die genannte zweite Zeitdauer kann sich dabei nach der Erfindung aus mindestens zwei Zündungsphasen zusammensetzen, während der sich ein Fahrzeug mit dem Kupplungsaktor in Betrieb befindet.

Nach dem Erkennen der Lagereglerschwingung wird daher zunächst durch ein Verändern der Einschalthysterese und Ausschalthysterese erreicht, dass die Lagereglerschwingung aktuell sehr klein wird. Gleichzeitig wird die zweite Zahl inkrementiert - ein Fehlerzähler hochgesetzt. Der Stand des Fehlerzählers wird am Ende der Zündungsphase des Fahrzeugs - das Fahrzeug wird mit eingeschaltetem Zündungssignal betrieben - in einem EEPROM abgespeichert. In der auf die aktuelle Zündungsphase folgenden nächsten Zündungsphase wird wieder die ursprüngliche Einschalthysterese und Ausschalthysterese verwendet. Treten nun wieder Lagereglerschwingungen auf, so wird durch Verändern der Einschalt- und Ausschalthysterese wieder die Lagereglerschwingung abgebaut und der Fehlerzähler inkrementiert. Überschreitet nun der Fehlerzähler, der nur einmal pro Zündungsphase inkrementiert werden kann, einen bestimmten Grenzwert, so ist dies ein eindeutiges Zeichen dafür, dass in dem betreffenden Fahrzeug eine Kupplung mit einer niedrigen Ausrückkraft verbaut würden ist. Die zweite Zahl hat während der vorbestimmten zweiten Zeitdauer also den zweiten Grenzwert überschritten, woraufhin nach der Erfindung ein anderer Lagereglerparametersatz ausgewählt und zur Lagerregelung verwendet wird, der ein weiteres Überschreiten der Grenzwerte und/oder des Stellpositionsschwellenwerts vermeidet. Da nun nach der Erfindung erkannt worden ist, dass es sich um eine Kupplung mit nur einer niedrigen Ausrückkraft handelt, kann der zweite Lagereglerparametersatz durch permanente Umschaltung zum Einsatz kommen, wobei dies durch eine Speicherung im EEPROM erreicht werden kann.

Die Erfindung schafft nun ein Verfahren, mit dem auftretende Lagereglerschwingungen des Stellglieds des Kupplungsaktors erkannt und kurzfristig verringert werden können. Neben dieser kurzfristigen Verringerung von Lagereglerschwingungen sieht die Erfindung auch vor, das mehrfache hintereinander Auftreten von Lagereglerschwingungen während eines längeren Zeitraums zu erkennen und geeignete Gegenmaßnahmen zu treffen, indem auf einen Parametersatz des Lagereglers umgeschaltet wird, der der Ausrückkraftcharakteristik der verbauten Kupplung Rechnung trägt.

Als kurzfristige Maßnahmen, die sofort eingeleitet werden können, werden nach der Erfindung das Verkleinern der Einschalthysterese und Ausschalthysterese des Lagereglers vorgesehen und auch die Verringerung bzw. das Abschalten der Lastkompensation. Als langfristige Maßnahme wird nach der Erfindung vorgeschlagen, eine Aktivierung eines zweiten Lagereglerparametersatzes des Lagereglers durchzuführen und zur Lageregelung zu verwenden, wobei der zweite Lagereglerparametersatz der Ausrückkraftcharakteristik der verbauten Kupplung Rechnung trägt. Diese langfristige Maßnahme wird nach der vorliegenden Erfindung dann eingeleitet, wenn die Lagereglerschwingungen während eines zweiten vorbestimmten Zeitintervalls mehrfach festgestellt werden.

Die Erfindung schafft schließlich auch eine Vorrichtung zur Durchführung des Verfahrens, wobei die Vorrichtung einen Kupplungsaktor und eine Einrichtung zur Betätigung des Kupplungsaktors besitzt und diese Einrichtung eine Regeleinrichtung mit mindestens zwei Regelparametersätzen besitzt und eine Speichereinrichtung aufweist zur Speicherung zumindest der zweiten Zahl - mit der das mehrfache Auftreten von Lagereglerschwingungen während der zweiten Zeitdauer erfasst wird - und die Regeleinrichtung zur Auswahl von Regelparametersätzen in Abhängigkeit der zweiten Zahl ausgebildet ist.

Damit kann die Regeleinrichtung nach dem mehrfachen Erkennen von Lagereglerschwingungen auf einen Regelparametersatz umschalten, der der nur mit geringer Ausrückkraft arbeitenden verbauten Kupplung im Fahrzeug Rechnung trägt und damit das Auftreten von Lagereglerschwingungen im Bereich des Kraftnullpunkts vermeidet.

Hinsichtlich vorstehend im Einzelnen nicht näher erläuterter Merkmale der Erfindung wird im Übrigen ausdrücklich auf die Ansprüche verwiesen.

## Patentansprüche

1. Verfahren zur Verringerung von Stellpositionsschwingungen eines von einem Lageregler angesteuerten Stellglieds eines Kupplungsaktors, welcher eine Kupplung zwischen einer Antriebseinheit und einem Getriebe betätigt, mit folgenden Schritten:
a) es wird eine erste Zahl der während einer vorbestimmten ersten Zeitdauer in Folge auftretenden, einen Stellpositionsschwellenwert überschreitenden Istpositionswerte der Stellposition erfasst;
b) überschreitet die im Schritt a) erfasste erste Zahl einen vorbestimmten ersten Grenzwert, so wird eine Ein- und Ausschalthysterese des Lagereglers verkleinert sowie der Stellpositionsschwellenwert verringert;
c) es wird eine zweite Zahl der während einer vorbestimmten zweiten Zeitdauer auftretenden Überschreitungen nach Schritt b) bestimmt und beim Überschreiten eines zweiten Grenzwertes wird aus mindestens zwei Lagereglerparametersätzen derjenige ausgewählt und zur Lageregelung verwendet, der ein Überschreiten der Grenzwerte und/oder des Stellpositionsschwellenwerts vermeidet.

2. Verfahren nach Anspruch 1, **dadurch gekennzeichnet, dass** der Stellpositionsschwellenwert einer von einem oberen Schwellenwert überlagerten Sollposition entspricht.

3. Verfahren nach Anspruch 1 oder 2, **dadurch gekennzeichnet, dass** die erste Zahl um ein Inkrement erhöht wird, wenn der Gradient der Istpositionswerte einen vorbestimmten Schwellenwert überschreitet.

4. Verfahren nach einem der vorstehenden Ansprüche, **dadurch gekennzeichnet, dass** die erste Zeitdauer als Funktion der Frequenz einer Grenzzyklusschwingung des Stellglieds oder als feste Zeitdauer oder betriebspunktabhängig bestimmt wird.

5. Verfahren nach einem der vorstehenden Ansprüche, **dadurch gekennzeichnet, dass** die erste Zahl um ein Inkrement erhöht wird, wenn der Betrag des Gradienten der Sollposition einen vorbestimmten Schwellenwert unterschreitet.

6. Verfahren nach einem der vorstehenden Ansprüche, **dadurch gekennzeichnet, dass** die erste Zahl um ein Inkrement erhöht wird, wenn der Betrag der Differenz aus Istpositionswert und einem über die erste Zeitdauer gemittelten Sollpositionswert einen vorbestimmten Schwellenwert überschreitet.

7. Verfahren nach einem der vorstehenden Ansprüche, **dadurch gekennzeichnet, dass** die unter b) und/oder c) genannten Schritte über dem gesamten Regelbereich oder Teilen des Regelbereichs des Lagereglers durchgeführt werden.

8. Verfahren nach einem der vorstehenden Ansprüche, **dadurch gekennzeichnet, dass** zusätzlich zum unter b) genannten Schritt eine Lastkompensation des Lagereglers verringert oder abgeschaltet wird.

9. Verfahren nach einem der vorstehenden Ansprüche**, dadurch gekennzeichnet, dass** der Lageregler ein PID-Regler ist, dessen P, I und D Beiwerte nach dem Überschreiten des ersten Grenzwerts abgesenkt werden.

10. Vorrichtung zur Lageregelung einer, mittels einer Kupplungsaktorik betätigbaren Kupplung, zwischen einer Antriebseinheit und einem Getriebe, mit einer Lageregelungseinrichtung mittels derer eine Regelung der Kupplungsaktorik und eine Erfassung von Messdaten zur Ermittlung und Verringerung von Stellpositionsschwingungen eines von der Lageregelungseinrichtung angesteuerten Stellgliedes eines Kupplungsaktors erfolgt, wobei die Lageregelungseinrichtung derart ausgebildet ist, dass in einem ersten Schritt eine erste Zahl der während einer vorbestimmten ersten Zeitdauer auftretenden, einen Stellpositionsschwellenwert überschreitenden Istpositionswerte der Stellposition erfassbar ist und dann in einem zweiten Schritt, wenn die im ersten Schritt erfasste erste Zahl einen vorbestimmten ersten Grenzwert überschreitet, eine Ein- und/oder Ausschalthysterese der Lageregelungseinrichtung verkleinerbar sowie der Stellpositionsschwellenwert verringerbar und eine Fehlerinformation speicherbar ist, und sodann in einem dritten Schritt ermittelbar ist, ob eine Fehlerinformation vorliegt und in diesem Fall eine zweite Zahl der während einer vorbestimmten zweiten Zeitdauer gemäß dem ersten Schritt auftretenden Überschreitungen bestimmbar und beim Überschreiten eines zweiten Grenzwertes aus mindesten zwei Lagereglerparametersätzen derjenige auswählbar und zur Lageregelung verwendbar ist, der ein Überschreiten der Grenzwerte vermeidet und die Information, dass dieser Lagereglerparametersatz zur Anwendung vorgesehen ist, speicherbar ist.

## Claims

1. Method for the reduction of actuation-position oscillations of an actuating member, activated by a position controller, of a clutch actuator which actuates a clutch between a drive unit and a transmission, having the following steps:
a) a first number of the actual position values of the actuation position which occur in succession during a predetermined first time duration and which overshoot an actuation-position threshold value is detected;
b) if the first number detected in step a) overshoots a predetermined first limit value, a switch-on and switch-off hysteresis of the position controller is diminished and the actuation-position threshold value is reduced;
c) a second number of the overshoots according to step b) which occur during a predetermined second time duration is determined, and, if a second limit value is overshot, out of at least two position-controller parameter sets that one which avoids an overshoot of the limit values and/or of the actuation-position threshold value is selected and is used for position control.

2. Method according to Claim 1, **characterized in that** the actuation-position threshold value corresponds to a desired position overlaid by an upper threshold value.

3. Method according to Claim 1 or 2, **characterized in that** the first number is increased by an increment when the gradient of the actual position values overshoots a predetermined threshold value.

4. Method according to one of the preceding claims, **characterized in that** the first time duration is determined as a function of the frequency of a limit cycle oscillation of the actuating member or as a fixed time duration or independently of the operating point.

5. Method according to one of the preceding claims, **characterized in that** the first number is increased by an increment when the amount of the gradient of the desired position undershoots a predetermined threshold value.

6. Method according to one of the preceding claims, **characterized in that** the first number is increased by an increment when the amount of the difference between the actual position value and a desired position value averaged over the first time duration overshoots a predetermined threshold value.

7. Method according to one of the preceding claims, **characterized in that** the steps mentioned under b) and/or c) are carried out over the entire control range or parts of the control range of the position controller.

8. Method according to one of the preceding claims, **characterized in that**, in addition to the step mentioned under b), a load compensation of the position controller is reduced or switched off.

9. Method according to one of the preceding claims, **characterized in that** the position controller is a PID controller, the P, I and D connection values of which are lowered after the overshoot of the first limit value.

10. Apparatus for the position control of a clutch, actuable by means of a clutch actuator, between a drive unit and a transmission, with a position-control device, by means of which a control of the clutch actuator and a detection of measurement data take place in order to determine and reduce actuation-position oscillations of an actuating member, activated by the position-control device, of a clutch actuator, the position-control device being designed in such a way that, in a first step, a first number of the actual position values of the actuation position which occur during a predetermined first time duration and which overshoot an actuation-position threshold value can be detected and then, in a second step, if the first number detected in the first step overshoots a predetermined first limit value, a switch-on and/or switch-off hysteresis of the position-control device can be diminished and the actuation-position threshold value can be reduced and fault information can be stored, and then, in a third step, it can be determined whether fault information is present and, in this case, a second number of the overshoots occurring during a predetermined second time duration according to the first step can be determined and, if a second limit value is overshot, out of at least two position-controller parameter sets that one which avoids an overshoot of the limit values can be selected and can be used for position control, and information that this position-controller parameter set is intended for use can be stored.

## Revendications

1. Procédé de réduction des oscillations de la position de commande d'un organe de commande d'un actionneur d'embrayage commandé par un régulateur de position, lequel actionne un embrayage entre une unité d'entraînement et une boîte de vitesses, comprenant les étapes suivantes :
a) on détecte un premier nombre de valeurs de positions instantanées de la position de commande qui dépassent une valeur seuil de position de commande et qui se produisent en succession pendant une première durée prédéterminée,
b) si le premier nombre détecté dans l'étape a) dépasse une première valeur limite prédéterminée, une hystérésis d'enclenchement et de coupure du régulateur de position est réduite et la valeur seuil de position de commande est réduite ;
c) on détermine selon l'étape b) un deuxième nombre de dépassements se produisant pendant une deuxième durée prédéterminée, et en cas de dépassement d'une deuxième valeur limite, on sélectionne et utilise pour la régulation de position, à partir d'au moins deux jeux de paramètres du régulateur de position, celui qui évite un dépassement des valeurs limites et/ou de la valeur seuil de position de commande.

2. Procédé selon la revendication 1, **caractérisé en ce que** la valeur seuil de position de commande correspond à une position de consigne superposée à une valeur seuil supérieure.

3. Procédé selon la revendication 1 ou 2, **caractérisé en ce que** le premier nombre est augmenté d'un incrément, quand le gradient des valeurs de positions instantanées dépasse une valeur seuil prédéterminée.

4. Procédé selon l'une quelconque des revendications précédentes, **caractérisé en ce que** la première durée est déterminée sous forme de fonction de la fréquence d'un oscillation de cycle limite de l'organe de commande ou sous forme de durée fixée ou en fonction du point de fonctionnement.

5. Procédé selon l'une quelconque des revendications précédentes, **caractérisé en ce que** le premier nombre est augmenté d'un incrément, quand la valeur du gradient est inférieure à la position de consigne d'une valeur seuil prédéterminée.

6. Procédé selon l'une quelconque des revendications précédentes, **caractérisé en ce que** le premier nombre est augmenté d'un incrément quand la valeur de la différence entre la valeur de position instantanée et une valeur de position de consigne moyennée sur la première durée dépasse une valeur seuil prédéterminée.

7. Procédé selon l'une quelconque des revendications précédentes, **caractérisé en ce que** les étapes citées aux points b) et/ou c) sont effectuées sur toute la plage de réglage ou sur des parties de la plage de réglage du régulateur de position.

8. Procédé selon l'une quelconque des revendications précédentes, **caractérisé en ce qu'**en plus de l'étape citée au point b), une compensation de la charge du régulateur de position est réduite ou coupée.

9. Procédé selon l'une quelconque des revendications précédentes, **caractérisé en ce que** le régulateur de position est un régulateur PID, dont les facteurs de correction P, I et D sont diminués après le dépassement de la première valeur limite.

10. Dispositif de régulation de position d'un embrayage pouvant être actionné par un système d'actionneur d'embrayage, entre une unité d'entraînement et une boîte de vitesses, comprenant un dispositif de régulation de position au moyen duquel on effectue une régulation du système d'actionneur d'embrayage et une détection de données de mesure pour la détermination et la réduction des oscillations de la position de commande d'un organe de commande d'un actionneur d'embrayage commandé par le dispositif de régulation de position, de telle sorte que dans une première étape, un premier nombre de valeurs de position instantanées de la position de commande se produisant pendant une première durée prédéterminée et dépassant la valeur seuil de position de commande puisse être déterminé, et que dans une deuxième étape, si le premier nombre détecté dans la première étape dépasse une première valeur limite prédéterminée, une hystérésis d'enclenchement et/ou de coupure du dispositif de régulation de position peut être réduite et la valeur seuil de position de commande peut être réduite et une information d'erreur peut être mémorisée, et qu'ensuite dans une troisième étape, on puisse déterminer si une information d'erreur est présente et dans ce cas un deuxième nombre de dépassements se produisant pendant une deuxième durée prédéterminée selon la première étape peut être déterminé et en cas de dépassement d'une deuxième valeur limite, on peut sélectionner et utiliser pour la régulation de la position, à partir d'au moins deux jeux de paramètres de régulateur de position, celui qui évite un dépassement des valeurs limites et l'information que ce jeu de paramètres de régulateur de position est utilisable, peut être mémorisée.
